# EUROPÄISCHE PATENTSCHRIFT

(11) **EP 1 217 162 B1**
(45) Veröffentlichungstag und Bekanntmachung des Hinweises auf die Patenterteilung: **18.08.2004**
(21) Anmeldenummer: 01122917.6
(22) Anmeldetag: 25.09.2001
(51) Int. Cl.: E06B 3/984, B29C 45/16, F16J 15/10, F16J 15/06, B29D 31/00, B29C 43/18

(54) **Dichtungsvorrichtung**
Sealing device
Dispositif d'étanchéité

(30) Priorität: 22.12.2000 DE 20021743 U
(43) Veröffentlichungstag der Anmeldung: 26.06.2002
(73) Patentinhaber: Hachtel, Steffen, 73650 Winterbach (DE)
(72) Erfinder: Hachtel, Steffen, 73650 Winterbach (DE)
(74) Vertreter: Möbus, Daniela, Dr.-Ing.

(56) Entgegenhaltungen:
- EP-A- 0 402 909
- EP-A- 1 045 174
- US-A- 5 228 702
- US-A- 5 536 018

## Beschreibung

Die Erfindung betrifft eine Dichtungsvorrichtung von Fensterrahmenteilen aus Holz, mit der zwei oder mehrere Konstruktionselemente, wie beispielsweise Teile eines Fensterrahmens, an ihrer Verbindungsstelle gegenseitig abgedichtet werden können.

Werden mehrere Konstruktionselemente, wie beispielsweise Teile eines Fensterrahmens, miteinander verbunden, so kann es notwendig sein, diese Verbindungsstellen der Konstruktionselemente abzudichten. Diese Abdichtung stellt insbesondere dann ein Problem dar, wenn die Konstruktionselemente sich unter wechselnden Belastungen oder wechselnden Umgebungsbedingungen, wie der Temperatur oder der Feuchtigkeit, in ihren Abmessungen verändern.

Ein Beispiel für solche "arbeitenden" Konstruktionselemente stellen Teile eines aus Holz gefertigten Fensterrahmens dar. Durch Feuchtigkeitsaufnahme, Austrocknung, Alterung und aufgrund, unterschiedlicher Umgebungstemperaturen "arbeitet" das Holz, d. h. es verändert seine Abmessungen. Durch diese Veränderung der Abmessungen können an den Stellen, an denen die einzelnen Konstruktionselemente oder Rahmenelemente miteinander verbunden sind, Fugen oder Spalte entstehen. Dies ist gerade heutzutage, wo - um Wärmeverluste zu vermeiden - auf eine gute Abdichtung geachtet wird, sehr unerwünscht.

Folglich müssen diese Fugen oder Spalten abgedichtet werden. Hierzu werden Dichtungen verwendet, wobei insbesondere Dichtungen aus Leim oder Silikon zur Anwendung kommen. Diese sind allerdings aufgrund ihrer elastischen Struktur schwer zu handhaben bzw. zu montieren. Dies gilt insbesondere bei der Verwendung automatischer Fertigungsanlagen.

Aus EP 1 045 174 A2 ist eine Dichtungsvorrichtung bekannt, die aus einem Dichtungsrahmen und einem Dichtungselement gebildet ist. An der Dichtungsanordnung sind zapfenartige Vorsprünge ausgeformt, die in Bohrungen von Bauteilen eingreifen können, an denen die Dichtungsvorrichtung angebracht werden soll. Bei der bekannten Dichtungsvorrichtung sind die Vorsprünge auf Materialien abgestimmt, die unter Einbeziehung der bekannten Dichtungsvorrichtung miteinander verbunden werden sollen. Als Materialien werden zum Beispiel Metalle, also starre Materialien, genannt, die unter Temperaturschwankungen und Feuchtigkeitsänderungen im Umgebungsbereich dieser Materialien nahezu keine Änderungen erfahren.

Aus EP 0 402 909 A1 ist eine Dichtungsvorrichtung einer elektrolytischen Zelle bekannt geworden. Der Dichtungsrahmen weist eine Vielzahl von Stiften auf, die den Dichtungsrahmen an zu verbindenden Teilen führen und halten sollen. Die Stifte sind beispielsweise als Verraststifte ausgebildet, die in exakt vorgefertigte Löcher eingeschoben werden müssen, damit sie ihre Funktion erfüllen. Für zu verbindende Materialien, die unter Temperatur- und Feuchtigkeitseinfluss stark arbeiten, sind diese Stifte nicht vorgesehen.

Aufgabe der Erfindung ist es, eine Dichtungsvorrichtung bereitzustellen, mit der die Trennstelle von aneinander anstoßenden und sich in ihren Abmessungen aufgrund unterschiedlicher Umgebungstemperaturen ändernden Konstruktionselementen zuverlässig abgedichtet und an den sich ändernden Konstruktionselementen dauerhaft befestigt werden kann.

Die gestellte Aufgabe wird erfindungsgemäß durch die im Hauptanspruch aufgeführte Dichtungsvorrichtung gelöst. Die Unteransprüche geben bevorzugte Weiterbildungen an.

Die erfindungsgemäße Dichtungsvorrichtung ist zweiteilig ausgeführt. Sie besteht aus einem stabilen Dichtungsrahmen und aus einem damit verbundenen flexiblen Dichtungselement. Der Dichtungsrahmen liefert die für eine gute Handhabbarkeit erwünschte Stabilität, während das damit verbundene Dichtungselement die Flexibilität bietet, die für eine dauerhafte Abdichtung von sich in ihren Abmessungen auch ändernden Konstruktionselementen notwendig ist.

Das Dichtungselement hat dabei vorteilhafterweise einen größeren Durchmesser als der Dichtungsrahmen, damit durch ein Verdrücken des Dichtungselements, wenn die Dichtvorrichtung zwischen den Konstruktionselementen eingebaut ist, die Dichtfunktion erzielt werden kann. Durch die Flexibilität oder Elastizität des Dichtungselements wird dabei auch bei sich in ihren Abmessungen verändernden Konstruktionselementen eine zuverlässige Abdichtung gewährleistet.

Der Dichtungsrahmen ist vorteilhafterweise an die Form der aneinander anstoßenden Konstruktionselemente angepasst. Er weist beispielsweise eine derartige Gestaltung auf, dass er in Dichtungsnuten, die vorteilhafterweise in den Konstruktionselementen angeordnet sind, eingelegt werden kann. Hierbei kann er durch eine sehr flexible geometrische Gestaltung sehr genau an die zu verbindenden Konstruktionselemente und deren Oberflächengestalt angepasst werden.

Der Dichtungsrahmen kann vorteilhafterweise mit zusätzlichen Befestigungselementen versehen sein, mit denen er mit zumindest einem der Konstruktionselemente verbunden werden kann, sodass er sich schon vor dem Zusammenfügen der Konstruktionselemente stabil an seinem Platz befindet. Als Befestigungselemente werden Dübel verwendet. Diese weisen einen dreieckigen Querschnitt auf. Die Befestigungselemente sind zumindest an ihren Enden in radialer Richtung verformbar, sodass eine festere Verbindung mit dem Konstruktionselement erreicht werden kann.

Das Material der Dichtungsvorrichtung wird vorteilhafterweise aufgrund der Materialien der zu verbindenden Konstruktionselemente und den zu erwartenden Belastungen und Umweltbedingungen ausgewählt. Für den Rahmen hat sich dabei die Verwendung eines thermoplastischen Kunststoffs, wie beispielsweise POM, PP oder PA als vorteilhaft erwiesen, da dieser in üblichen Spritzgießvorrichtungen in beliebig wählbaren Formen und auch mittels automatischen Fertigungsstraßen gut hergestellt werden kann.

Um das ganze Eigenschaftsspektrum der thermoplastischen Kunststoffe hinsichtlich Stabilität gegen Wärme, Alterung und Klimaeinflüssen ausnützen zu können, kann der Dichtrahmen vorteilhaft aus verschiedenen Werkstoffen hergestellt und damit seine Eigenschaften gezielt beeinflusst werden. Die Bandbreite der Werkstoffe reicht von thermoplastischen Kunststoffen, die bei einer Temperatur ab 150 °C verarbeitet werden, bis zu Werkstoffen, die bei 350 °C verarbeitet werden.

Als Material für das Dichtungselement wird vorteilhafterweise Silikon, beispielsweise Flüssigsilikon, oder ein thermoplastisches Elastomer verwendet. Diese Materialien können ebenfalls in Spritzgießvorrichtungen gut verarbeitet werden und bieten zugleich die für die Abdichtung notwendige Flexibilität, Druckverformungsresistenz und Temperaturbeständigkeit. Sollte für das Dichtungselement ein thermoplastisches Elastomer zur Anwendung kommen, können wiederum thermoplastische Elastomere eingesetzt werden, die Verarbeitungstemperaturen von 150 °C bis 350 °C aufweisen, sodass durch die Materialauswahl die Eigenschaften gezielt beeinflussbar sind. Dieser Temperaturbereich ist auch für eine gemeinsame Fertigung von Dichtungsrahmen und Dichtungselement vorteilhaft.

Beim Spritzgießen der obigen Vorrichtung können verschiedene Verfahren, wie Ein- oder Mehrkomponentenspritzgießverfahren und Vorrichtungen zur Anwendung kommen. Vorteilhafterweise wird zunächst in einem ersten Schritt der Dichtungsrahmen gespritzt und in einem zweiten Schritt dann das Dichtungselement, das somit zugleich in eine stoff- und/oder formschlüssige Verbindung mit dem Dichtungsrahmen gebracht werden kann. In einer weiteren vorteilhaften Ausgestaltung des Herstellungsverfahrens kann das Spritzen des Dichtungsrahmens und des Dichtungselements in einem einzigen Spritzwerkzeug erfolgen.

Ausführungsbeispiele erfindungsgemäß ausgebildeter Dichtungsvorrichtungen werden nachfolgend anhand der beiliegenden Zeichnungen erläutert. Gleiche Elemente sind dabei in allen Zeichnungsfiguren mit den gleichen Bezugszeichen bezeichnet.

Es zeigen:
- Fig. 1: eine Ausführungsform einer erfindungsgemäßen Dichtungsvorrichtung in einer Ansicht von oben;
- Fig. 2: die Dichtungsvorrichtung der Fig. 1 in einer Seitenansicht;
- Fig. 3: ein Teil der Dichtungsvorrichtung der Fig. 2 in einer vergrößerten Ansicht;
- Fig. 4: eine Seitenansicht einer erfindungsgemäßen Dichtungsvorrichtung im eingebauten Zustand; und
- Fig. 5: eine Aufsicht auf die erfindungsgemäße Dichtungsvorrichtung der Fig. 4 im eingebauten Zustand.

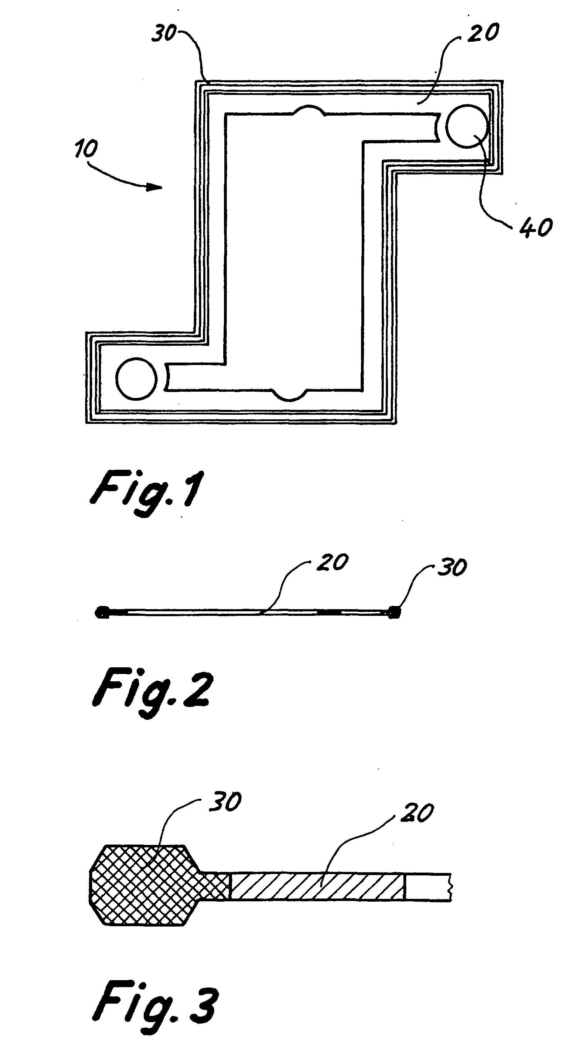

Fig. 1 zeigt eine Ausführungsform einer erfindungsgemäßen Dichtungsvorrichtung 10 in einer Ansicht von oben. Die Dicktungsvorrichtung besteht aus dem Dichtungsrahmen 20 und dem damit verbundenen Dichtungselement 30. Die hier abgebildete Form des Dichtungsrahmens 20 ist nur beispielhaft zu verstehen, da sich die Form des Dichtungsrahmens hauptsächlich nach der Form der zu verbindenden Konstruktionselemente und der Art der an diesen eventuell angeordneten Dichtnuten richtet. Das Dichtungselement 30 ist in diesem Ausführungsbeispiel außen am Dichtungsrahmen 20 angeordnet, wobei es aber beispielsweise auch auf dem Dichtungsrahmen 20 oder am inneren Umfang des Dichtungsrahmens 20 angeordnet sein könnte. Am Dichtungsrahmen 20 können zusätzlich, hier nur schematisch angedeutete, Befestigungselemente 40, beispielsweise in Form von Dübeln angeordnet sein. Es können stattdessen oder zusätzlich zu diesen auch Löcher vorgesehen werden, in die getrennte Befestigungsteile, wie beispielsweise Stifte, eingesetzt werden können.

Fig. 2 zeigt die Ausführungsform der Befestigungsvorrichtung der Fig. 1 in einer Seitenansicht. Man erkennt hier aus anderem Blickwinkel, wie das Dichtungselement 30 außen am Dichtungsrahmen 20 angeordnet ist.

In Fig. 3 ist ein Teil dieser Seitenansicht in einer vergrößerten Darstellung gezeigt. Man erkennt hier gut, dass das Dichtungselement 30 einen größeren Durchmesser aufweist als der Dichtungsrahmen 20, sodass es im eingebauten Zustand zweischen den Konstruktionselementen verdrückt werden kann und so zuverlässig seine Dichtfunktion erfüllt.

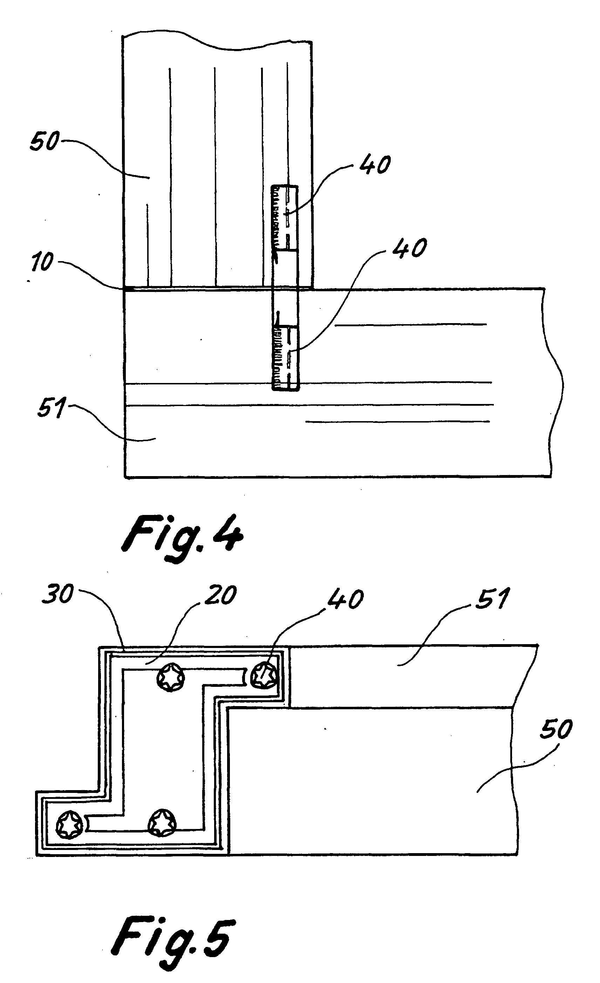

Fig. 4 zeigt ein Ausführungsbeispiel einer erfindungsgemäßen Dichtungsvorrichtung in einer Seitenansicht, wie sie zwischen zwei Konstruktionselementen 50 und 51, beispielsweise zwei Teilen eines Fensterrahmens eingebaut ist. Die Dichtungsvorrichtung ist in diesem Ausführungsbeispiel mit zusätzlichen Befestigungselementen 40 in Form von Dübeln versehen, die im eingebauten Zustand in die Konstruktionselemente 50, 51 eingreifen und die Dichtungsvorrichtung 10 zuverlässig mit den Konstruktionselementen 50, 51 verbinden.

In Fig. 5 ist die Ausführungsform der erfindungsgemaßen Befestigungsvorrichtung, wie sie in Fig. 4 dargestellt ist, nochmals in einer Aufsicht gezeigt. Man erkennt, dass die Dichtungsvorrichtung in sehr guter Weise an die unterschiedliche Gestaltung der Konstruktionselemente 50, 51 angepasst werden kann.

## Patentansprüche

1. Dichtungsvorrichtung von Fensterrahmenteilen aus Holz zur gegenseitigen Abdichtung der Verbindungsstelle von mindestens zwei aneinander anstoßenden Konstruktionselementen, wobei die Dichtungsvorrichtung (10) aus einem stabilen Dichtungsrahmen (20) und einem flexiblen mit dem Dichtungsrahmen (20) verbundenen Dichtungselement (30) besteht, wobei der Dichtungsrahmen (20) zusätzliche Befestigungselemente (40) umfasst, mit denen er an den Konstruktionselementen (50, 51) befestigt werden kann, wobei die Befestigungselemente (40) in Form von Dübeln ausgebildet sind, und wobei zumindest die Endstücke der Dübel in radialer Richtung elastisch deformierbar sind, **dadurch gekennzeichnet, dass** die Dübel einen dreieckigen Querschnitt aufweisen.

2. Dichtungsvorrichtung nach Anspruch 1, **dadurch gekennzeichnet, daas** das Dichtungselement (30) einen größeren Durchmesser als der Dichtungsrahmen (20) aufweist.

3. Dichtungsvorrichtung nach Anspruch 1 oder 2, **dadurch gekennzeichnet, dass** der Dichtungsrahmen (20) eine dreidimensionale Form besitzt, die an die Form der Stoßstelle zwischen den Konstruktionselementen (50, 51) insbesondere an dort angeordnete Dichtungsnuten angepasst ist.

4. Dichtungsvorrichtung nach einem der vorhergehenden Ansprüche, **dadurch gekennzeichnet, dass** das Dichtungselement (30) über eine stoffschlüssige und/oder formschlüssige Verbindung mit dem Dichtungsrahmen (20) verbunden ist.

5. Dichtungsvorrichtung nach einem der vorhergehenden Ansprüche, **dadurch gekennzeichnet, dass** der Dichtungsrahmen (20) aus einem thermoplastischen Kunststoff wie POM, PP oder PA besteht.

6. Dichtungsvorrichtung nach Anspruch 5, **dadurch gekennzeichnet, dass** die Verarbeitungstemperatur des thermoplastischen Kunststoffs des Dichtungsrahmens (20) zwischen 150 °C und 350 °C liegt.

7. Dichtungsvorrichtung nach einem der vorhergehenden Ansprüche, **dadurch gekennzeichnet, dass** das Dichtungselement (30) aus Silikon besteht.

8. Dichtungsvorrichtung nach einem der Ansprüche 1 bis 6, **dadurch gekennzeichnet, dass** das Dichtungselement (30) aus einem thermoplastischen Elastomer, dessen Verarbeitungstemperatur im Bereich von 150 °C bis 350 °C liegt, besteht.

9. Dichtungsvorrichtung nach einem der Ansprüche 5 bis 8, **dadurch gekennzeichnet, dass** die Herstellung mittels eines Spritzgießverfahrens erfolgt.

10. Dichtungsvorrichtung nach Anspruch 9, **dadurch gekennzeichnet, dass** zunächst der Dichtungsrahmen (20) gespritzt und anschließend das Dichtungselement (30) an den Dichtungsrahmen (20) in einer stoff- und formschlüssigen Verbindung angespritzt wird.

11. Dichtungsvorrichtung nach Anspruch 9 oder 10, **dadurch gekennzeichnet, dass** das Spritzgießverfahren in mehreren Schritten aber in einem einzigen Werkzeug erfolgt.

## Claims

1. Sealing device for timber window-frame parts for sealing the joint between at least two abutting structural members, wherein the sealing device (10) consists of a stable sealing frame (20) and a flexible sealing element (30) joined to the sealing frame (20), the sealing frame (20) comprises additional fixing elements (40) with which it can be fixed to the structural members (50, 51), the fixing elements (40) are configured as dowels, and at least the end parts of the dowels are elastically deformable in the radial direction, **characterized in that** the dowels have a triangular cross-section.

2. Sealing device according to Claim 1, **characterized in that** the sealing element (30) has a larger diameter than the sealing frame (20).

3. Sealing device according to Claim 1 or Claim 2, **characterized in that** the sealing frame (20) has a three-dimensional shape which is adapted to the shape of the joint between the structural members (50, 51) in particular to sealing grooves provided at that point.

4. Sealing device according to any one of the preceding claims, **characterized in that** the sealing element (30) is joined to the ceiling frame (20) with an adhesive and/or positive connection.

5. Sealing device according to any one of the preceding claims, **characterized in that** the sealing frame (20) consists of a thermoplastic material such as POM, PP or PA.

6. Sealing device according to Claim 5, **characterized in that** the processing temperature of the thermoplastic material of the sealing frame (20) is between 150°C and 350°C.

7. Sealing device according to any one of the preceding claims, **characterized in that** the sealing element (30) is made of silicone.

8. Sealing device according to any one of Claims 1 to 6, **characterized in that** the sealing element (30) is made of a thermoplastic elastomer whose processing temperature is in the range of 150°C to 350°C.

9. Sealing device according to any one of Claims 5 to 8, **characterized in that** it is produced by an injection moulding process.

10. Sealing device according to Claim 9, **characterized in that** the sealing frame (20) is injected first, and the sealing element (30) is then injected on to the sealing frame (20) with an adhesive and positive connection.

11. Sealing device according to Claim 9 or Claim 10, **characterized in that** the injection moulding process is performed in a plurality of steps but in a single mould.

## Revendications

1. Dispositif d'étanchéité de parties de châssis de fenêtre en bois pour l'étanchéité réciproque du point de liaison d'au moins deux éléments de construction jointifs, le dispositif d'étanchéité (10) étant constitué d'un cadre d'étanchéité (20) stable et d'un élément d'étanchéité (30) flexible, relié au cadre d'étanchéité (20), le cadre d'étanchéité (20) comprenant des éléments de fixation (40) supplémentaires au moyen desquels il peut être fixé aux éléments de construction (50, 51), les éléments de fixation (40) étant réalisés sous la forme de chevilles, et au moins les embouts des chevilles étant déformables élastiquement dans la direction radiale, **caractérisé en ce que** les chevilles présentent une section transversale triangulaire.

2. Dispositif d'étanchéité selon la revendication 1, **caractérisé en ce que** l'élément d'étanchéité (30) présente un plus grand diamètre que le cadre d'étanchéité (20).

3. Dispositif d'étanchéité selon la revendication 1 ou 2, **caractérisé en ce que** le cadre d'étanchéité (20) présente une forme tridimensionnelle qui est adaptée à la forme du joint entre les éléments de construction (50, 51) en particulier à des rainures d'étanchéité prévues à cet endroit.

4. Dispositif d'étanchéité selon l'une des revendications précédentes, **caractérisé en ce que** l'élément d'étanchéité (30) est relié au cadre d'étanchéité (20) par une liaison par adhérence de matière et/ou complémentarité de formes.

5. Dispositif d'étanchéité selon l'une des revendications précédentes, **caractérisé en ce que** le cadre d'étanchéité (20) est constitué dans une matière thermoplastique telle que POM, PP ou PA.

6. Dispositif d'étanchéité selon la revendication 5, **caractérisé en ce que** la température de traitement de la matière thermoplastique du cadre d'étanchéité (20) se situe entre 150 °C et 350 °C.

7. Dispositif d'étanchéité selon l'une des revendications précédentes, **caractérisé en ce que** l'élément d'étanchéité (30) est en silicone.

8. Dispositif d'étanchéité selon l'une des revendications 1 à 6, **caractérisé en ce que** l'élément d'étanchéité (30) est en un élastomère thermoplastique dont la température de traitement se situe entre 150 °C et 350 °C.

9. Dispositif d'étanchéité selon l'une des revendications 5 à 8, **caractérisé en ce que** la fabrication s'effectue par un procédé de moulage par injection.

10. Dispositif d'étanchéité selon la revendication 9, **caractérisé en ce que** le cadre d'étanchéité (20) est d'abord injecté, puis l'élément d'étanchéité (30) est injecté sur le cadre d'étanchéité (20) en une liaison par adhérence de matière et complémentarité de formes.

11. Dispositif d'étanchéité selon la revendication 9 ou 10, **caractérisé en ce que** le procédé de moulage par injection s'effectue en plusieurs étapes mais dans un seul outil.
